# FASCICULE DE BREVET EUROPEEN

(11) **EP 0 678 428 B1**
(45) Date de publication et mention de la délivrance du brevet: **08.07.1998**
(21) Numéro de dépôt: 95105616.7
(22) Date de dépôt: 13.04.1995
(51) Int. Cl.: B60S 1/28

(54) **Dispositif d'essuie-glace à deux balais mono-bras**
Scheibenwischer mit zwei Blättern an einem einzigen Arm
Windscreen wiper with two blades attached to a single arm

(30) Priorité: 19.04.1994 CH 1179/94; 04.05.1994 FR 9405476
(43) Date de publication de la demande: 25.10.1995
(73) Titulaire: SMH Management Services AG, CH-2501 Biel (CH)
(72) Inventeur: Duthé, Bernard, Escourt 3310 (ZA)
(74) Mandataire: de Montmollin, Henri

(56) Documents cités:
- DE-A- 3 335 813
- DE-A- 3 707 233

## Description

La présente invention concerne un dispositif d'essuie-glace notamment pour véhicules automobiles et plus particulièrement un tel dispositif destiné à essuyer efficacement des pare-brise de grande courbure avec un seul bras.

Pour essuyer des surfaces vitrées, notamment des pare-brise de véhicules automobiles, on utilise en général un balai d'essuie-glace articulé sur un bras d'essuie-glace pouvant être animé d'un mouvement de rotation oscillant.

Les dispositifs d'essuie-glace classiques comprennent généralement deux bras oscillants comportant chacun un balai d'essuie-glace, les bras suivant des trajectoires circulaires. Ces dispositifs présentent l'inconvénient de ne pas essuyer les coins supérieurs du pare-brise, ce qui restreint, notamment en cas de pluie, le champ de visibilité du conducteur et conduit à une réduction de la sécurité.

Pour résoudre ce problème on a déjà proposé des dispositifs d'essuie-glace comportant un bras dont la longueur efficace de balayage est variable en fonction du mouvement oscillant du bras. En particulier, le document DE-A-2 215 307 décrit un dispositif d'essuie-glace comprenant un bras oscillant unique apte à essuyer une surface vitrée. Le bras peut coulisser suivant son axe longitudinal dans un mouvement alternatif de va-et-vient, et est monté sur une pièce-guide animée d'un mouvement de rotation alternatif transmis par le moteur de l'essuie-glace. Ce type de dispositif ne convient toutefois pas pour des pare-brise à grande courbure. En effet, pour que le balai reste en contact avec toute la surface à essuyer, il est nécessaire d'équiper ce bras d'un ressort suffisamment puissant pour assurer une pression d'appui satisfaisante sur la surface à essuyer. Toutefois, cette solution peut s'avérer insuffisante car pour éviter le décollement des extrémités du balai on risque d'écraser la lame du balai contre le pare-brise.

Une solution qui assure une pression d'appui suffisante des balais sur la surface à essuyer dans le cas de surfaces à grande courbure est décrite dans le document EP-A-0 465 331. Dans ce document, chaque bras du dispositif comprend un balai équipé d'une lame d'essuie-glace portée par des griffes d'une monture porteuse. Une des griffes est associée par une première extrémité à un levier qui coulisse longitudinalement en direction de la surface à essuyer sous l'action d'un ressort, tandis qu'elle peut coulisser par une deuxième extrémité le long de la lame en direction d'une extrémité de cette dernière.

Le système de coulissement et de rappel du levier en direction de la surface à essuyer de ce dispositif présente toutefois l'inconvénient de se bloquer rapidement à la suite de la pénétration de saletés dans le système, ce qui conduit à annuler l'effet recherché.

Par ailleurs, la réalisation des pièces coulissantes les unes par rapport aux autres rend la fabrication du dispositif complexe et coûteuse.

De plus, si on veut remplacer le balai ou la lame du balai de ce dispositif d'essuie-glace, on ne peut pas prendre un balai ou une lame classique, car on est obligé d'utiliser un balai ayant une monture d'une construction particulière permettant le coulissement.

Une autre solution est aussi décrite dans le document DE-A-3 335 813. Dans ce document, le dispositif d'essuie-glace comprend un unique bras portant un balais principal et un balai supplémentaire, ce dernier pouvant être monté et démonté facilement.

Cependant cette solution ne permet pas d'utiliser deux balais classiques, car il faut que le balai supplémentaire soit plus court.

En plus, le méchanisme portant ce balai court est relativement complexe et somptueux.

Ainsi, la présente invention a pour but principal de remédier aux inconvénients de l'art antérieur susmentionné en fournissant un dispositif d'essuie-glace qui assure une augmentation de l'efficacité des balais d'essuie-glace sur des surfaces vitrées à grande courbure, dite surfaces panoramiques, tout en réduisant l'encombrement du dispositif d'essuie-glace dans sa position de repos, et ceci en utilisant des composants classiques.

A cet effet la présente invention a pour objet un dispositif d'essuie-glace comprenant un unique bras oscillant et destiné à essuyer une surface vitrée, ledit bras comportant deux éléments extrêmes articulés respectivement aux extrémités d'un élement intermédiaire, l'élément intermédiaire et le premier élément extrême portant chacun un balai d'essuie-glace pour essuyer ladite surface, tandis que le deuxième élément extrême est relié à un organe moteur pour animer le bras d'un mouvement circulaire alternatif, ledit dispositif comportant en outre des premiers moyens de rappel montés entre le deuxième élément extrême et l'élément intermédiaire (dispositif du type divulgué dans DE-A-3 335 813), ledit dispositif étant caractérisé en ce qu'il comporte des deuxièmes moyens de rappel montés entre le premier élément extrême et l'élément intermédiaire, ces deuxièmes moyens de rappel agissant en même temps que les premiers moyens de rappel de manière à appliquer fermement les balais contre la surface vitrée, le premier élément extrême portant un balai d'essuie-glace étant articulé à l'une des extrémités de l'élément intermédiaire.

L'invention a également pour objet un dispositif d'essuie-glace comportant un bras unique oscillant et destiné à essuyer une surface vitrée, ledit bras comportant un premier et un deuxième élément articulés l'un à l'autre et mis bout à bout, le deuxième élément étant relié par une de ses extrémités à un organe moteur et par son extrémité opposée au premier élément, le premier élément portant un premier et un deuxième balai d'essuie-glace montés de manière que leurs trajectoires d'essuyage se chevauchent, le deuxième balai étant placé au voisinage de l'extrémité libre du premier élément, le dispositif comportant en outre des premiers moyens de rappel montés entre le premier et le deuxième élément (dispositif du type divulgué dans DE-A-3 335 813), ledit dispositif étant caractérisé en ce qu'il comporte des deuxièmes moyens de rappel montés entre le premier élément et le deuxième balai pour appliquer les balais contre la surface vitrée, en même temps que les premiers moyens de rappel, et en ce que les deuxièmes moyens de rappel s'étendent sensiblement perpendiculairement au bras et à la surface vitrée. Différents modes de réalisation de l'invention sont précisés dans les revendications dépendantes 2 à 4 et 6 à 8.

De plus, l'invention a pour objet un arrangement comprenant au moins un dispositif d'essuie-glace selon l'invention.

Grâce aux caractéristiques du dispositif d'essuie-glace selon l'invention, on obtient un dispositif capable d'essuyer efficacement une surface vitrée, même si celle-ci est une surface à grande courbure, sans risque d'écrasement des lames, et ce avec un encombrement minimal.

D'autres avantages et caractéristiques de la présente invention apparaîtront plus clairement à la lecture de la description détaillée d'exemples de réalisation particuliers qui va suivre, la description étant faite à titre purement explicatif et non limitatif en liaison avec les dessins annexés dans lesquels :
- la figure 1 représente le pare-brise d'un véhicule muni d'un dispositif d'essuie-glace selon l'invention,
- la figure 2 est une vue en élévation de dessus d'un premier mode de réalisation d'un dispositif d'essuie-glace selon l'invention,
- la figure 3 est une vue de côté du dispositif d'essuie-glace de la figure 2,
- la figure 4 est une vue de côté d'une autre mode de réalisation du dispositif d'essuie-glace selon l'invention, et
- la figure 4a représente une vue agrandie d'une partie du dispositif de la figure 4 montrant la fixation des deuxièmes moyens de rappel du deuxième balai.

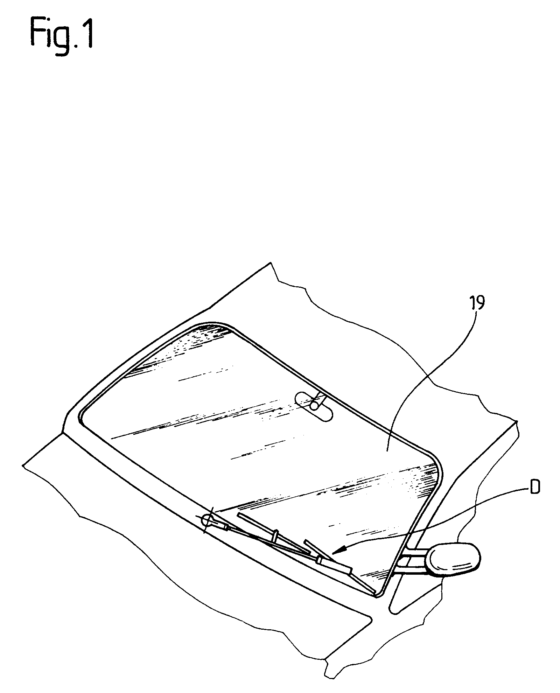

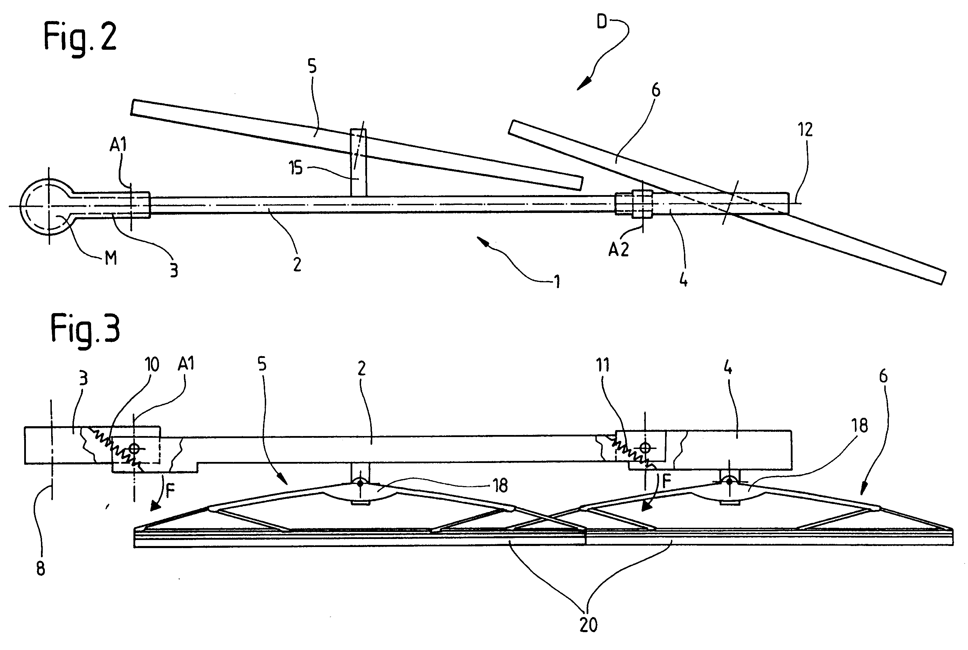

En se référant aux figures 1 et 2, on voit un dispositif d'essuie-glace selon l'invention désigné par la référence générale D. Le dispositif D comprend un unique bras oscillant 1 s'étendant selon un axe longitudinal 12. Ce bras comprend un premier élément extrême 4 et un deuxième élément extrême 3, et un élément intermédiaire 2 de liaison. Les premier et deuxième éléments extrêmes 4, 3 sont articulés respectivement autour d'un premier axe A1 et d'un deuxième axe A2 (représentés par des traits mixtes au dessin) dans des régions voisines des extrémités de l'élément intermédiaire 2. Les axes A1 et A2 s'étendent sensiblement perpendiculairement à l'axe longitudinal 12. L'élément intermédiaire 2 peut ainsi pivoter autour de l'axe A1 tandis que l'élément extrême 4 peut pivoter autour de l'axe A2.

L'élément extrême 3 est relié à un organe moteur M du type moteur d'essuie-glace classique qui anime le bras d'un mouvement circulaire alternatif autour d'un axe de rotation 8 pour essuyer la surface vitrée 19.

L'élément intermédiaire 2 porte un premier balai 5 et le premier élément extrême 4 porte un deuxième balai 6 Ces balais sont avantageusement d'une construction classique. Chacun des balais comporte, de façon connue, une monture 18 qui porte une lame à essuyer 20 et ne sera donc pas décrit ici en détail.

Dans l'exemple décrit, le premier balai 5 est relié à l'élément intermédiaire 2 au moyen d'une aile de fixation 15. Cette aile de fixation s'étend perpendiculairement à l'axe longitudinal 12 à partir de l'élément 2. Le premier balai 5 est articulé sur l'aile 15 de sorte qu'il peut pivoter autour d'un axe parallèle à la surface à essuyer.

A la figure 2 on voit un exemple de montage des balais 5, 6 sur le bras oscillant 1. Dans ce cas, l'axe longitudinal du premier balai 5 est incliné par rapport à l'axe longitudinal 12 du bras 1 et aussi par rapport à l'axe longitudinal du deuxième balai 6. Toutefois, on comprend que les balais 5, 6 peuvent être inclinés d'un angle quelconque l'un par rapport à l'autre et par rapport au bras dès lorsqu'ils ne se touchent pas. L'inclinaison du deuxième balai 6 par rapport à l'axe longitudinal 12 est dans cet exemple plus importante que celle du premier balai 5 avec l'axe 12.

Bien entendu, le premier balai 5 peut selon une variante être directement fixé en dessous du bras 1 en tenant compte de l'inclinaison du deuxième balai 6 par rapport à l'axe 12 du bras.

De préférence, les trajectoires d'essuyage des deux balais se chevauchent légèrement pour éviter qu'une partie de la surface 19 ne soit pas essuyée.

La figure 3 montre une vue de côté du dispositif de l'invention selon un premier mode de réalisation. On voit que le dispositif d'essuie-glace D comprend en outre des premiers et des deuxièmes moyens de rappel 10, 11 montés respectivement entre le deuxième élément extrême 3 et l'élément intermédiaire 2, et entre l'élément intermédiaire 2 et le premier élément extrême 4.

Les premiers et deuxièmes moyens de rappel 10, 11 exercent une force de rappel selon les flèches F au dessin et tendent à faire pivoter l'élément intermédiaire 2 ainsi que l'élément extrême 4 en direction de la surface vitrée 19 pour appliquer les balais 5, 6 contre cette dernière et assurent ainsi un essuyage efficace de celle-ci.

Les moyens 10, 11 sont, dans l'exemple décrit, des ressorts de rappel. Les moyens de rappel 10 s'étendent entre le deuxième élément extrême 3 et l'extrémité de l'élément intermédiaire 2 qui lui est associée. Les moyens de rappel 11 s'étendent entre le premier élément extrême 4 et l'extrémité de l'élément intermédiaire 2 qui lui est associée.

On comprend que les premiers et deuxièmes moyens de rappel sont dimensionnés et disposés de manière à assurer un bon fonctionnement du dispositif D, c'est-à-dire que les premiers moyens de rappel 10 exercent une force d'appui en direction de la surface vitrée 19 qui est supérieure à la force de rappel exercée par les deuxièmes moyens de rappel 11, cette deuxième force étant elle-même naturellement suffisante pour assurer un bon essuyage. Bien entendu, l'homme de métier choisira ces moyens de rappel de manière que le bilan des forces d'appui exercées par les premiers et deuxièmes moyens de rappel 10, 11 donnent le résultat désiré, sans risque d'écraser les lames 20 contre la surface vitrée 19.

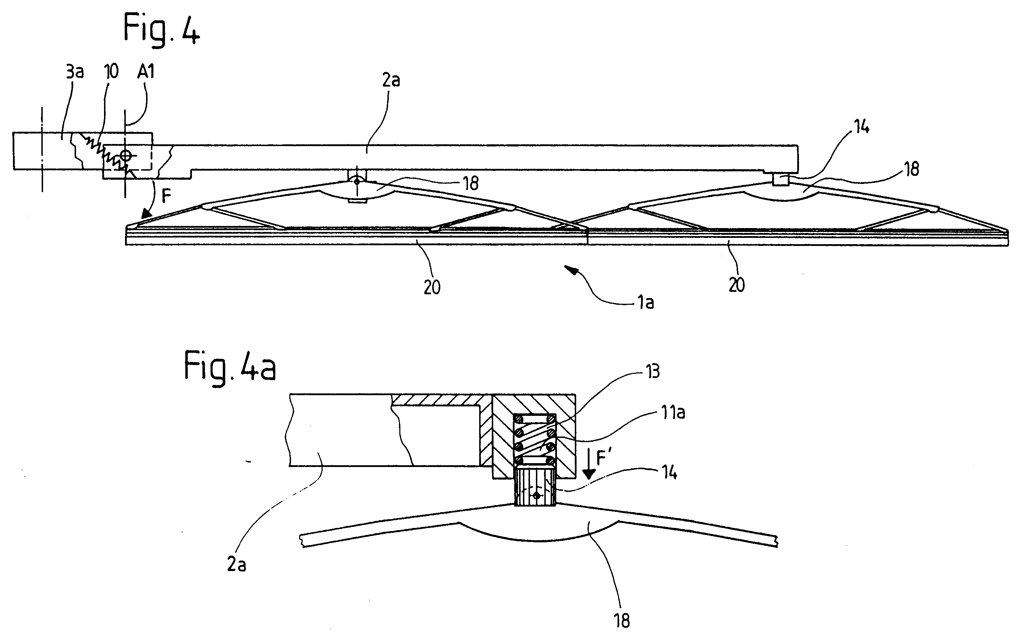

En se référant à la figure 4 on voit un deuxième mode de réalisation du dispositif selon l'invention. Dans ce mode de réalisation, le dispositif d'essuie-glace D selon l'invention comprend également un bras unique oscillant 1a, mais ici ce bras 1a comporte un premier et un deuxième éléments 2a, 3a articulés mis bout à bout. Le deuxième élément 3a est relié par une extrémité à l'organe moteur M, et par son extrémité opposée au premier élément 2a. L'articulation de ces éléments correspond à celle entre le deuxième élément extrême 3 et l'élément intermédiaire 2 du premier mode de réalisation décrit ci-dessus.

Le premier élément 2a porte un premier et un deuxième balai d'essuie-glace 5, 6 montés de sorte que leurs trajectoires d'essuyage se chevauchent. Le deuxième balai d'essuie-glace 6 est placé au voisinage de l'extrémité libre du premier élément 2a. Comme expliqué ci-dessus, le montage de ces balais 5,6 est réalisé de manière qu'ils assurent un essuyage optimal de la surface vitrée 19.

Le dispositif d'essuie-glace D comprend ici aussi en outre des premiers et des deuxièmes moyens de rappel référencé 10, 11a. Les premiers moyens de rappel 10 correspondent aux premiers moyens de rappel décrits ci-dessus et sont montés entre le premier et le deuxième élément 2a, 3a pour faire pivoter le bras 1a dans la direction de la surface vitrée 19 autour de l'axe A1, comme dans le mode de réalisation des figures 2 et 3. Les deuxièmes moyens de rappel 11a sont montés sur le premier élément 2a lui-même, entre celui-ci et le deuxième balai 6. Ces deuxièmes moyens de rappel 11a s'étendent sensiblement perpendiculairement au bras 1a et à la surface vitrée 19, de sorte qu'ils exercent une force qui appuie le balai 6 dans la direction de ladite surface 19. Le premier élément 2a porte donc le premier et le deuxième balai 5, 6. Le premier balai 5 est appuyé contre la surface vitrée 19 grâce aux premiers moyens de rappel 10 comme cela a été expliqué ci-dessus tandis que le deuxième balai est appuyé contre ladite surface 19 grâce aux deuxièmes moyens de rappel 11a comme cela sera expliqué plus en détail ci-après, de sorte que ces balais 5,6 assurent un bon essuyage.

Dans ce mode de réalisation, les premiers et deuxièmes moyens de rappel sont de préférence des ressorts de rappel.

Le premier élément 2a peut comprendre une partie extrême à laquelle est associé le deuxième balai d'essuie-glace 6. Cette partie extrême peut être une partie indépendante et séparée du premier élément 2a (voir figure 4a), mais peut être également intégré dans ce premier élément. Cette partie est de préférence pourvue d'un évidement 13 dans lequel sont logés les moyens de rappel 11a tenus en place par un corps cylindrique 14. Le corps cylindrique 14 est monté coulissant longitudinalement dans l'évidement 13 et ferme ce dernier de sorte que les deuxièmes moyens de rappel 11a sont prisonniers de cet évidement 13.

Le deuxième balai 6 est attaché au corps 14 (voir figure 4a) lui-même associé aux deuxièmes moyens de rappel 11a. Ceci peut être fait d'une manière classique.

Ainsi, les deuxièmes moyens de rappel 11a qui peuvent avantageusement être légèrement pré-comprimés dans l'évidement 13 exercent une force d'appui F' perpendiculaire à la surface vitrée 19. Grâce au corps coulissant 14 (et à la pré-compression), les deuxièmes moyens de rappel 11a ne peuvent pas se relâcher dans la direction opposée de cette surface, mais uniquement dans la direction de la surface vitrée et poussent donc le deuxième balai 6 contre la surface 19.

Ici aussi, la force d'appui exercée par les premiers moyens de rappel 10 est de préférence supérieure à celle exercée par les deuxièmes moyens de rappel 11a pour les mêmes raisons que ci-dessus.

Grâce aux moyens de rappel 10, 11 et 11a qui appliquent les balais 5 et 6 contre la surface vitrée 19 le dispositif d'essuie-glace selon l'invention assure une pression d'appui suffisante pour assurer un bon contact des lames 20 avec toute la surface à essuyer. Par conséquent, même si la surface vitrée 19 est par exemple, un pare-brise panoramique, et présente une grande courbure et une grande hauteur, les moyens de rappel 10 et 11, 11a assurent un maintien optimal du contact des lames 20 avec la surface vitrée 19 et ceci pour la totalité de la surface vitrée 19, y compris dans les régions extrêmes de celle-ci, et ce sans risque d'écraser les lames contre la surface vitrée 19.

De plus, l'encombrement du dispositif d'essuie-glace selon l'invention est relativement faible par rapport aux dispositifs classiques, parce qu'on n'a qu'un seul bras qui, avantageusement, peut être relié d'une façon classique à un organe moteur connu, tout en assurant un essuyage efficace.

Bien entendu, l'invention n'est pas limitée à un seul dispositif d'essuie-glace, mais peut comprendre un arrangement d'un ou plusieurs dispositifs d'essuie-glace selon l'invention si la surface à essuyer est très large ou si l'encombrement du dispositif ou de l'arrangement des dispositifs ne joue pas un rôle important.

## Revendications

1. Dispositif d'essuie-glace (D) comprenant un unique bras oscillant et destiné à essuyer une surface vitrée (19), ledit bras (1) comportant deux éléments extrêmes (3, 4) articulés respectivement aux extrémités d'un élément intermédiaire (2), l'élément intermédiaire (2) et le premier élément extrême (4) portant chacun un balai d'essuie-glace (5, 6) pour essuyer ladite surface (19), tandis que le deuxième élément extrême (3) est relié à un organe moteur (M) pour animer le bras (1) d'un mouvement circulaire alternatif, ledit dispositif (D) comportant en outre des premiers moyens de rappel (10) montés entre le deuxième élément extrême (3) et l'élément intermédiaire (2), ledit dispositif étant caractérisé en ce qu'il comporte des deuxièmes moyens de rappel (11) montés entre le premier élément extrême (4) et l'élément intermédiaire (2), ces deuxièmes moyens de rappel (11) agissant en même temps que les premiers moyens de rappel (10) de manière à appliquer fermement les balais (5, 6) contre la surface vitrée (19), le premier élément extrême (4) portant un balai d'essuie-glace (6) étant articulé à l'une des extrémités de l'élément intermédiaire (2).

2. Dispositif selon la revendication 1, caractérisé en ce que les balais (5,6) sont placés de façon que leurs trajectoires d'essuyage se chevauchent légèrement.

3. Dispositif selon l'une quelconque des revendications précédentes, caractérisé en ce que lesdits premiers et deuxièmes moyens de rappel (10, 11) sont des ressorts de rappel.

4. Dispositif selon l'une quelconque des revendications précédentes, caractérisé en ce que la force d'appui exercée par les premiers moyens de rappel (10) est supérieure à celle qui est exercée par les deuxièmes moyens de rappel (11).

5. Dispositif d'essuie-glace (D) comportant un bras unique oscillant et destiné à essuyer une surface vitrée (19), ledit bras (1a) comportant un premier et un deuxième élément (2a, 3a) articulés l'un à l'autre et mis bout à bout, le deuxième élément (3a) étant relié par une de ses extrémités à un organe moteur (M) et par son extrémité opposée au premier élément (2a), le premier élément (2a) portant un premier et un deuxième balai d'essuie-glace (5, 6) montés de manière que leurs trajectoires d'essuyage se chevauchent, le deuxième balai (6) étant placé au voisinage de l'extrémité libre du premier élément (2a), le dispositif comportant en outre des premiers moyens de rappel (10) montés entre le premier (2a) et le deuxième élément (3a), ledit dispositif étant caractérisé en ce qu'il comporte des deuxièmes moyens de rappel (11a) montés entre le premier élément (2a) et le deuxième balai (6), ces deuxièmes moyens de rappel (11a) agissant en même temps que les premiers moyens de rappel (10) de manière à appliquer fermement les balais (5, 6) contre la surface vitrée (19), et en ce que les deuxièmes moyens de rappel (11a) s'étendent sensiblement perpendiculairement au bras et à la surface vitrée (19).

6. Dispositif selon la revendication 5, caractérisé en ce que lesdits premiers et deuxièmes moyens de rappel (10, 11a) sont des ressorts de rappel.

7. Dispositif selon la revendication 5, caractérisé en ce que les deuxièmes moyens de rappel (11a), sont montés pré-comprimés dans un évidement (13) et retenus prisonnier dans cet évidement (13) par un corps cylindrique (14) qui est monté coulissant longitudinalement dans ledit évidemment (13).

8. Dispositif selon l'une quelconque des revendications 5 à 7, caractérisé en ce que la force d'appui exercée par les premiers moyens de rappel (10) est supérieure à celle exercée par les deuxièmes moyens de rappel (11a).

9. Arrangement d'essuie-glace, caractérisé en ce qu'il comprend un ou plusieurs dispositifs d'essuie-glace (D) selon l'une quelconque des revendications précédentes.

## Claims

1. Windscreen wiping device (D) comprising a sole oscillating arm and arranged to wipe a glass surface ((9), said arm (1) comprising two outer members (3, 4) joined respectively to the extremities of an intermediate member (2), the intermediate member (2) and the first outer member (4) each carrying a windscreen wiper (5, 6) for wiping said surface (19), while the second outer member (3) is connected to a motor (M) for providing the arm (1) with an alternating circular movement, said device (D) further comprising first return means (10) mounted between the second outer member (3) and the intermediate member (2), said device been characterized in that it comprises second return means (11) mounted between the first outer member (4) and the intermediate member (2), acting as the same time that the first return means (10) so as to firmly apply the wipers (5, 6) against the glass surface ((9), the first outer member (4) carrying a windscreen wiper (6) being joined to one of the ends of the intermediate member (2).

2. Device according to claim 1, characterized in that the wipers (5, 6) are placed in such a way that their wiping paths slightly overlap each other.

3. Device according to any one of the preceding claims, characterized in that said first and second return means (10, 11) are return springs.

4. Device according to any one of the preceding claims, characterized in that the pressing force applied by the first return means (10) is superior to the pressing force which is applied by the second return means (11).

5. Windscreen wiping device (D) comprising a sole oscillating arm and arranged to wipe a glass surface (19), said arm (1a) comprising a first and a second member (2a, 3a) which are joined one to the other and are put end to end, the second member (3a) being connected by one of its extremities to a motor (M) and by its opposite extremity to the first member (2a), the first member (2a) carrying a first and a second windscreen wiper (5, 6) mounted in such a way that their wiping paths overlap each other, the second wiper (6) being placed towards the free extremity of the first member (2a), the device further comprising first return means (10) mounted between said first (2a) and second (3a) member, said device been characterized in that it comprises second return means (11a) mounted between the first member (2a) and the second wiper (6), such second return means (11a) acting as the same time that the first return means (10) so as to firmly apply the wipers (5, 6) against the glass surface (19), and in that said second return means (11a) extend substantially perpendicularly to said arm and to said glass surface (19).

6. Device according to claim 5, characterized in that said first and second return means (10, 11a) are return springs.

7. Device according to claim 5, characterized in that said second return means (11a) are mounted in a precompressed manner in a cavity (13) and are held prisoner in said cavity (13) by a cylindrical body (14) which is fixed longitudinally slidingly in said cavity (13).

8. Device according to any one of claims 5 to 7, characterized in that said the pressing force applied by said first return means (10) is superior to the force which is applied by said second return means (11a).

9. Windscreen wiping arrangement, characterized in that it comprises one or several windscreen wiping devices (D) according to any one of the preceding claims.

## Patentansprüche

1. Scheibenwischervorrichtung (D), umfassend einen einzigen oszillierenden Arm und bestimmt zum Reinigen einer Glasoberfläche (19), welcher Arm (1) zwei Endelemente (3, 4) umfaßt, die jeweils an die Enden eines Zwischenelements (2) angelenkt sind, wobei das Zwischenelement (2) und das erste Endelement (4) jedes einen Scheibenwischer (5, 6) für das Reinigen der Oberfläche (19) tragen, während das zweite Endelement (3) mit einem Motororgan (M) für den Antrieb des Armes (1) zu einer alternierenden Kreisbewegung verbunden ist, welche Vorrichtung (D) ferner zwischen dem zweiten Endelement (3) und dem Zwischenelement (2) montierte erste Vorspannmittel (10) umfaßt, welche Vorrichtung dadurch gekennzeichnet ist, daß sie zwischen dem ersten Endelement (4) und dem Zwischenelement (2) montierte zweite Vorspannmittel (11) umfaßt, welche zweiten Vorspannmittel (11) gleichzeitig mit den ersten Vorspannmitteln (10) derart wirksam sind, daß die Scheibenwischer (5, 6) fest an die Glasoberfläche (19) angelegt werden, wobei das erste einen Scheibenwischer (6) tragende Endelement (4) an einem der Enden des Zwischenelements (2) angelenkt ist.

2. Vorrichtung nach Anspruch 1, dadurch gekennzeichnet, daß die Wischer (5, 6) derart plaziert sind, daß ihre Wischbahnen einander etwas überlappen.

3. Vorrichtung nach einem der vorangehenden Ansprüche, dadurch gekennzeichnet, daß die ersten und zweiten Vorspannmittel (10, 11) Vorspannfedern sind.

4. Vorrichtung nach einem der vorangehenden Ansprüche, dadurch gekennzeichnet, daß die von den ersten Vorspannmitteln (10) ausgeübte Anlegekraft größer als jene ist, die von den zweiten Vorspannmitteln (11) ausgeübt wird.

5. Scheibenwischervorrichtung (D), umfassend einen einzigen oszillierenden Arm und bestimmt zum Reinigen einer Glasoberfläche (19), welcher Arm (1a) ein erstes und ein zweites Element (2a, 3a) umfaßt, die aneinander angelenkt aufeinanderfolgen, welches zweite Element (3a) mit einem seiner Enden mit einem Motororgan (M) und mit seinem entgegengesetzten Ende mit dem ersten Element (2a) verbunden ist, welches erste Element (2a) einen ersten und einen zweiten Scheibenwischer (5, 6) trägt, die so montiert sind, daß ihre Wischbahnen einander überlappen, welcher zweite Scheibenwischer (6) nahe dem freien Ende des ersten Elements (2a) plaziert ist, welche Vorrichtung ferner erste, zwischen dem ersten (2a) und dem zweiten Element (3a) montierte Vorspannmittel (10) umfaßt, welche Vorrichtung dadurch gekennzeichnet ist, daß sie zweite, zwischen dem ersten Element (2a) und dem zweiten Scheibenwischer (6) montierte Vorspannmittel (11a) umfaßt, welche zweiten Vorspannmittel (11a) gleichzeitig wie die ersten Vorspannmittel (10) derart wirken, daß die Scheibenwischen (5, 6) fest gegen die Glasoberfläche (19) angelegt werden, und daß die zweiten Vorspannmittel (11a) sich im wesentlichen senkrecht zu dem Arm und zu der Glasoberfläche (19) erstrecken.

6. Vorrichtung nach Anspruch 5, dadurch gekennzeichnet, daß die ersten und zweiten Vorspannmittel (10, 11a) Vorspannfedern sind.

7. Vorrichtung nach Anspruch 5, dadurch gekennzeichnet, daß die zweiten Vorspannmittel (11a) vorkomprimiert in einer Ausnehmung (13) montiert und in dieser Ausnehmung (13) eingelegt von einem zylindrischen Korpus (14) gehalten ist, der längs gleitbeweglich in der Ausnehmung (13) montiert ist.

8. Vorrichtung nach einem der Ansprüche 5 bis 7, dadurch gekennzeichnet, daß von den ersten Vorspannmitteln (10) ausgeübte Anlegekraft größer als die von den zweiten Vorspannmitteln (11a) ausgeübte Anlegekraft ist.

9. Scheibenwischeranordnung, dadurch gekennzeichnet, daß sie eine oder mehrere Scheibenwischvorrichtungen (D) nach einem der vorangehenden Ansprüche umfaßt.
